# EUROPEAN PATENT SPECIFICATION

(11) **EP 3 886 033 B1**
(45) Date of publication and mention of the grant of the patent: **08.05.2024**
(21) Application number: 21164641.9
(22) Date of filing: 24.03.2021
(51) Int. Cl.: G06Q 40/04, G06Q 50/06

(54) **BID MANAGEMENT APPARATUS AND BID MANAGEMENT METHOD IN A POWER TRANSACTION MARKET**
VORRICHTUNG UND VERFAHREN ZUR VERWALTUNG VON ANGEBOTEN IN EINEM MARKT FÜR ENERGIEVERSORGUNG
APPAREIL ET PROCÉDÉ DE GESTION D'APPEL D'OFFRES DANS UN MARCHÉ DE FOURNITURE D'ÉNERGIE

(30) Priority: 27.03.2020 JP 2020058023
(43) Date of publication of application: 29.09.2021
(73) Proprietor: HONDA MOTOR CO., LTD., Minato-ku Tokyo 107-8556 (JP)
(72) Inventor: OTOGASAKO, Ayano, Saitama, 351-0193 (JP); KANAZAWA, Hiroyuki, Saitama, 351-0193 (JP); KUDO, Jun, Saitama, 351-0193 (JP); SAKURAI, Takayuki, Saitama, 351-0193 (JP); PONTEFRACT, Thomas Stephen, Saitama, 351-0193 (JP)
(74) Representative: Weickmann & Weickmann PartmbB

(56) References cited:
- US-A1- 2008 052 145
- US-A1- 2011 202 192
- US-A1- 2012 249 068
- US-A1- 2016 196 621

## Description

This invention relates to a bid management apparatus and a bid management method managing a bid for power supplied to a power grid to a power transaction market.

As such an apparatus of this type, a conventionally known apparatus calculates the amount of power supplied from a detached house or the like to a power grid (see, for example, WO2015/019585A1). In the apparatus described in WO 2015/019585 A1, it is determined whether or not, for the power supplied to the power grid from a detached house or the like at a predetermined point in time in the future, a bid at the predetermined point in time can be made.

US 2011/202192 A1 shows an apparatus for aggregating power flow which may include a memory and a processor coupled to the memory to receive electric vehicle equipment (EVE) attributes from a plurality of EVEs, aggregate EVE attributes, predict total available capacity based on the EVE attributes, and dispatch at least a portion of the total available capacity to the grid. Power flow is aggregated by receiving EVE operational parameters from each EVE, aggregating the received EVE operational parameters, predicting total available capacity based on the aggregated EVE operational parameters, and dispatching at least a portion of the total available capacity to the grid.

US 2016/196621 A1 shows a power adjustment system in which a first estimator estimates power to be consumed by an electric load during an interested period, a second estimator estimates power obtainable from a power supply apparatus during the interested period, a calculator determines a profit in the interested period by calculating a difference between income and a cost, a controller selects one of a first state of supplying power from a power storage apparatus to a power grid and a second state of supplying power from the power storage apparatus to the electric load, and a determiner provides an instruction to the controller so as to maximize the profit in the interested period.

Meanwhile, in recent years, considered has been allowing battery-mounted vehicles such as electric vehicles (EVs) to participate in a power transaction via a power grid. However, the battery mounted on such a vehicle varies in connection state to the power grid due to movement of the vehicle. Thus, in order to allow such a mobile battery participate in a power transaction at a predetermined point in time in the future, it is difficult to calculate the amount of power supplied to the power grid at the predetermined point in time, so that it is difficult to determine whether or not a bid can be made. Furthermore, power is sometimes supplied to the power grid from an energy source capable of generating power, such as an engine generator. Thus, it is necessary to determine whether or not a bid can be made in consideration of the amount of power supplied from not only the energy source such as a battery capable of storing power but also the energy source capable of generating power.

An aspect of the present invention is a bid management apparatus according to claim 1. The bid management apparatus includes: a prediction-value calculation unit configured to calculate a prediction value of an amount of a power suppliable to the power grid by each of the energy sources in connection with the power grid at a predetermined point in time in future at which a power transaction is performed; a prediction-value correction unit configured to add a margin to the prediction value calculated by the prediction-value calculation unit to correct the prediction value; and a bid determination unit configured to determine, based on the prediction value corrected by the prediction-value correction unit, whether or not the bid for the power supplied from each of the energy sources in connection with the power grid at the predetermined point in time is able to be made in the power transaction market.

Another aspect of the present invention is a bid management method according to claim 6. The bid management method includes: calculating a prediction value of an amount of a power suppliable to the power grid by each of the energy sources in connection with the power grid at a predetermined point in time in future at which a power transaction is performed; adding a margin to the prediction value to correct the prediction value; and determining, based on the prediction value added the margin, whether or not the bid for the power supplied from each of the energy sources in connection with the power grid at the predetermined point in time is able to be made in the power transaction market.

The objects, features, and advantages of the present invention will become clearer from the following description of embodiments in relation to the attached drawings, in which:
FIG. 1 is a diagram schematically showing a power system to which a bid management apparatus according to an embodiment of the present invention is applied;
FIG. 2 is a diagram showing an exemplary functional configuration of the bid management apparatus according to an embodiment of the present invention;
FIG. 3 is a graph showing an exemplary on-vehicle battery-remaining-capacity information;
FIG. 4 is a diagram explanatorily showing the likelihood of connection of a vehicle to a connection apparatus;
FIG. 5A is an explanatory graph showing a method of predicting the number of vehicles to be connected;
FIG. 5B is an explanatory graph showing a method of predicting a mean value of respective battery remaining capacities of on-vehicle batteries at a predetermined point in time;
FIG. 6 is a diagram explanatorily showing position information; and
FIG. 7 is a flowchart showing an exemplary operation of the bid management apparatus according to an embodiment of the present invention.

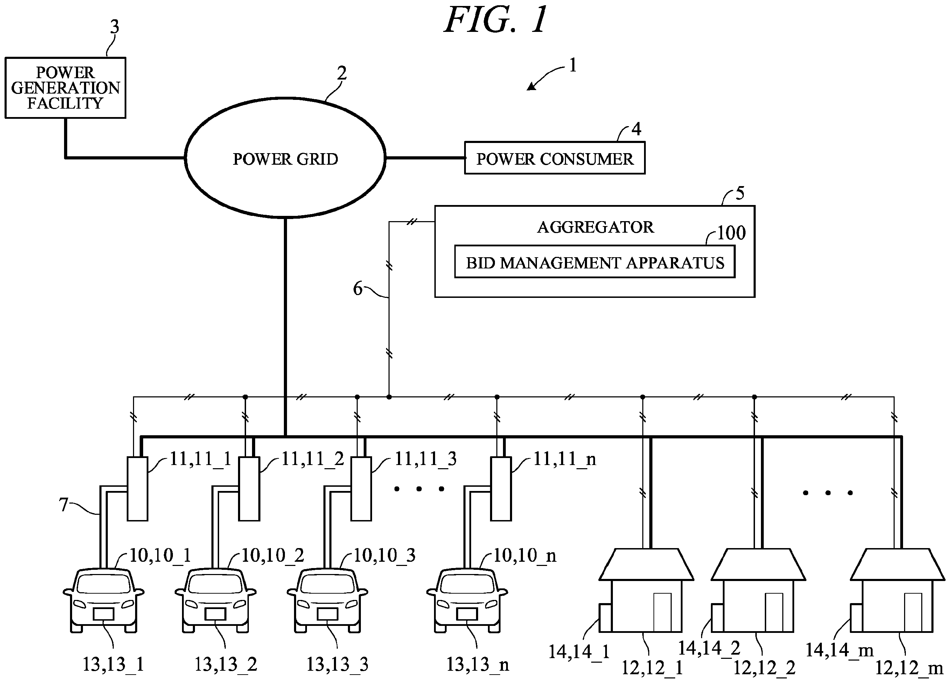

An embodiment of the present invention will be described below with reference to FIGS. 1 to 7. A bid management apparatus according to the embodiment of the present invention is an apparatus for managing bids for power supplied to a power grid to a power transaction market. Hereinafter, the power grid may be simply referred to as a grid.

Recently, the effective utilization of renewable energy has been promoted due to the increase in greenhouse gas emissions. As one of the effective utilizations, a Vehicle to Grid (V2G) system has been proposed, in which EVs are connected to a power grid and the energy stored in the batteries mounted on the EVs is utilized effectively.

In such a V2G system, the EVs not only receive power supply from the grid to charge the batteries, but also supply the power stored in the batteries to the grid, resulting in making the batteries function as if the batteries were one of the power storage facilities in a commercial power grid. As described above, in the V2G system, not only one-way power supply from the power grid to the EVs, but also two-way power transfer including power supply from the EVs to the power grid are performed.

As described above, in the V2G system, not only one-way power supply from the power grid to the EVs, but also two-way power transfer including power supply from the EVs to the power grid are performed. Therefore, considered has been central management of power for supply from EVs to the power grid in a Vehicle to Grid (V2G) system to allow the power to be bid in the power transaction market.

However, as described above, such a vehicle varies in connection state to the power grid due to movement of the vehicle, and thus the EV is less likely to be in connection with the power grid at a predetermined point in time in the future (hereinafter, simply referred to as a predetermined point in time) at which a power transaction is performed. As a result, it is difficult to predict the amount of power suppliable by the EV to the power grid at the predetermined point in time. Thus, with the conventional bid management method for a stationary battery that is provided to a house or the like and that does not vary in connection state to the power grid, it is likely to fail in suitable bid management of power supplied from the EV to the power grid.

Therefore, in the present embodiment, in order to suitably manage a bid for power supplied from a battery group including a battery provided in a movable object such as an EV to the power grid to the power transaction market, the bid management apparatus is provided as follows.

FIG. 1 schematically illustrates a power system to which the bid management apparatus according to the present embodiment is applied. As illustrated in FIG. 1, a power system 1 to which a bid management apparatus 100 is applied includes a power grid 2, a power generation facility 3 for supplying generated power to the power grid 2, and a power consumer 4 such as factories or various facilities supplied with power from the power grid 2.

The power system 1 also includes a plurality of EVs 10_1 to 10_n each transfer power between the EV 10 and the power grid 2, and a plurality of pieces of connection apparatus (electric vehicle supply equipment as abbreviated to EVSE) 11_1 to 11_n each interposed between the power grid 2 and the corresponding EV 10. The power system 1 also includes detached houses (hereinafter, simply referred to as houses) 12_1 to 12_m.

Each of batteries (hereinafter, also referred to as on-vehicle batteries) 13_1 to 13_n is mounted on the corresponding EV 10. The houses 12_1 to 12 _m are provided one-to-one with power generation apparatuses (not illustrated) such as photovoltaic power generation apparatuses, and batteries (hereinafter, referred to as house batteries) 14_1 to 14_m each for storing power generated by the corresponding power generation apparatus.

The power system 1 further includes a server device (hereinafter, referred to as an aggregator) 5 for centrally managing power for input and output between the power grid 2 and each EV 10.

As illustrated in FIG. 1, the aggregator 5, each piece of EVSE 11, and each house 12 are connected via a wired or wireless communication network 6, and are communicable with each other via the communication network 6.

Each piece of EVSE 11 and the corresponding EV 10 can be connected by a charging cable 7. Each piece of EVSE 11 and the corresponding EV 10 are capable of power transfer therebetween via the charging cable 7. In the present embodiment, each piece of EVSE 11 supplies power supplied from the power grid 2 to the corresponding EV 10 to charge the EV 10 (on-vehicle battery 13). Each piece of EVSE 11 also supplies power from the corresponding on-vehicle battery 13 to the power grid 2 to make the on-vehicle battery 13 function as one of the power storage facilities in the power grid 2.

The aggregator 5 makes a bid for the power stored in each on-vehicle battery 13 or each house battery 14 to a power transaction market.

The aggregator 5 is equipped with the bid management apparatus 100. The bid management apparatus 100 determines whether or not a bid to the power transaction market by the aggregator 5 can be made.

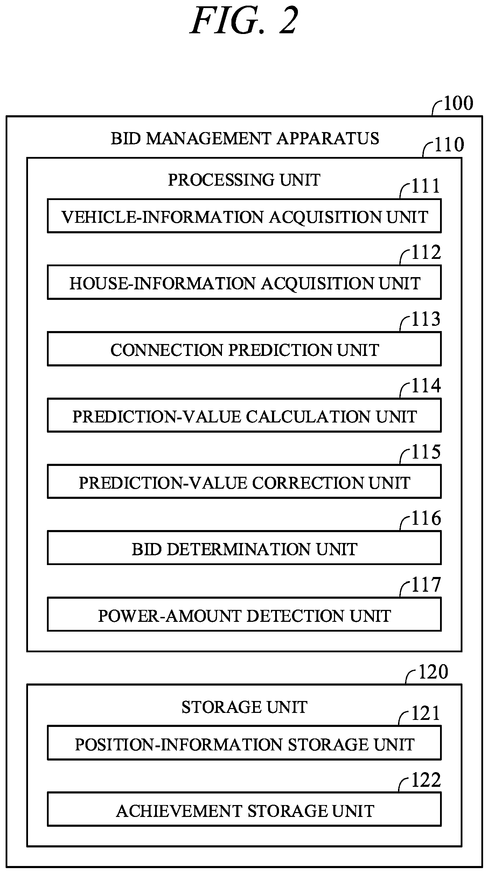

First, the configuration of the bid management apparatus 100 according to the present embodiment will be described. FIG. 2 is a diagram illustrating an exemplary functional configuration of the bid management apparatus 100. As illustrated in FIG. 2, the bid management apparatus 100 includes a processing unit 110 such as a central processing unit (CPU) (microprocessor), a read only memory (ROM), a random access memory (RAM), and a memory (storage unit) 120 such as a hard disk. The processing unit 110 executes a program stored in the storage unit 120 to function as a vehicle-information acquisition unit 111, a house-information acquisition unit 112, a connection prediction unit 113, a prediction-value calculation unit 114, a prediction-value correction unit 115, a bid determination unit 116, and a power-amount detection unit 117. The storage unit 120 includes a position-information storage unit 121 and an achievement storage unit 122.

The vehicle-information acquisition unit 111 acquires vehicle information from an EV 10. The vehicle-information acquisition unit 111 acquires, as the vehicle information, on-vehicle battery-remaining-capacity information indicating the remaining capacity of the on-vehicle battery and vehicle position information indicating the position of the vehicle. The vehicle-information acquisition unit 111 also acquires action plan information indicating an action plan of the vehicle, as the vehicle information. Note that the bid management apparatus 100 is communicable with the EV 10 via a wireless communication network (not illustrated) and the vehicle-information acquisition unit 111 acquires the vehicle information from the EV 10 via the wireless communication network. In the present embodiment, it is assumed that the vehicle-information acquisition unit 111 acquires the vehicle information from the EV 10 at a predetermined cycle.

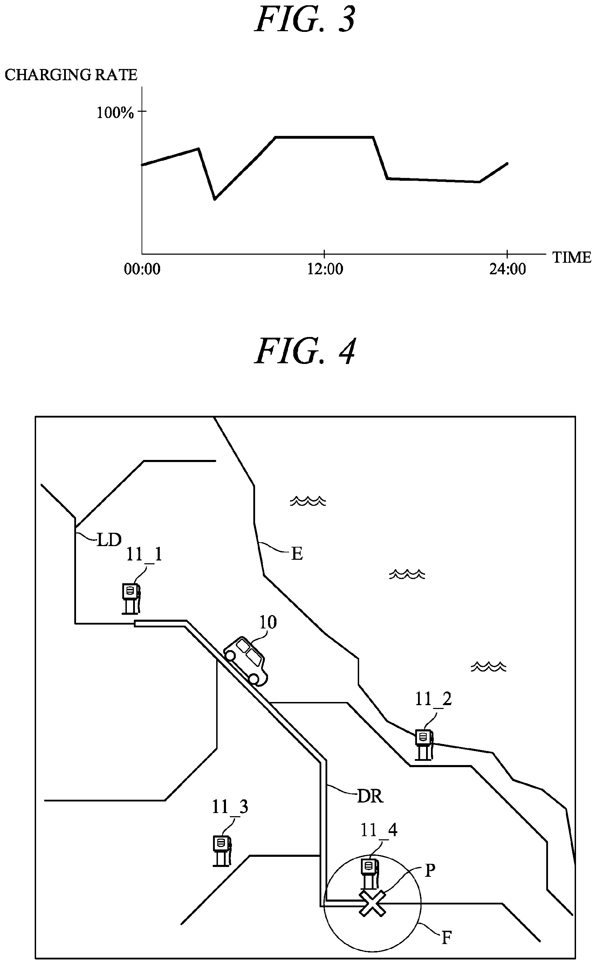

The on-vehicle battery-remaining-capacity information will now be described. FIG. 3 is a graph illustrating an exemplary on-vehicle battery-remaining-capacity information. The on-vehicle battery-remaining-capacity information is information in which the battery remaining capacity of the on-vehicle battery 13 in each time zone is recorded, for example, information in which the mean value of the battery remaining capacities in the past predetermined period (for example, past one week, past one month) is recorded for each time zone. Note that in the example illustrated in FIG. 3, the battery remaining capacity is represented by the charging rate; however, the battery remaining capacity may be represented by another parameter. The on-vehicle battery-remaining-capacity information is not limited to the information illustrated in FIG. 3, as long as the battery remaining capacity of the on-vehicle battery 13 in a predetermined point in time can be predicted.

The house-information acquisition unit 112 acquires, from the house 12 via communication network 6, house battery-remaining-capacity information indicating the remaining capacity of the house battery 14. Note that it is assumed in the present embodiment that the house-information acquisition unit 112 acquires the house battery-remaining-capacity information from the house 12 at a predetermined cycle. The house battery-remaining-capacity information is information in which the battery remaining capacity of the house battery 14 in each time zone is recorded. Note that the house battery-remaining-capacity information is similar to the on-vehicle battery-remaining-capacity information, and thus the detailed description will be omitted.

The connection prediction unit 113 predicts the likelihood of connection of the EV 10 to the piece of EVSE 11 at a predetermined point in time. The prediction method in the connection prediction unit 113 will now be described.

First, the connection prediction unit 113 predicts the position of the EV 10 at the predetermined point in time, based on the action plan information included in the vehicle information acquired by the vehicle-information acquisition unit 111. Next, the connection prediction unit 113 predicts the likelihood of connection of the EV 10 to the piece of EVSE 11 at the predetermined point in time, based on the predicted position of the EV 10 at the predetermined point in time and the position of the piece of EVSE 11. Note that the position information of the pieces of EVSE 11_1 to 11_n is stored in advance in the position-information storage unit 121.

In the present embodiment, when the predicted position of the EV 10 at the predetermined point in time is within a predetermined distance from the position of any piece of EVSE 11, the connection prediction unit 113 determines that the EV 10 has the likelihood of connection to the piece of EVSE 11 at the predetermined point in time. FIG. 4 explanatorily illustrates the likelihood of connection of the EV 10 to the piece of EVSE 11.

FIG. 4 illustrates that the EV 10 is traveling on the road LD. The thick line DR in FIG. 4 indicates a travel route based on the action plan information acquired by the vehicle-information acquisition unit 111 from the EV 10. The position P indicates the position of the EV 10 at the predetermined point in time, specified from the action plan information. The area F indicates an area within a predetermined distance from the position P of the EV 10 at the predetermined point in time. In the example illustrated in FIG. 4, the piece of EVSE 11_4 is in the area F. Thus, it is determined that the EV 10 has the likelihood of connection to the piece of EVSE 11_4 at the predetermined point in time.

The prediction-value calculation unit 114 calculates a prediction value of the amount of power suppliable by an on-vehicle battery 13 to the power grid 2 at the predetermined point in time (hereinafter, referred to as a first suppliable-power prediction value). The prediction-value calculation unit 114 also calculates a prediction value of the amount of power suppliable by a house battery 14 to the power grid 2 at the predetermined point in time (hereinafter, referred to as a second suppliable-power prediction value).

A method of calculating the first suppliable-power prediction value by the prediction-value calculation unit 114 will now be described. The prediction-value calculation unit 114 acquires the battery remaining capacity at the predetermined point in time of the on-vehicle battery 13, from the on-vehicle battery-remaining-capacity information of the EV 10 determined as having the likelihood of connection to the piece of EVSE 11 at the predetermined point in time.

For example, when the predetermined point in time is 12: 30, the prediction-value calculation unit 114 acquires the battery remaining capacity at 12: 30 from the on-vehicle battery-remaining-capacity information illustrated in FIG. 3. At this time, the prediction-value calculation unit 114 acquires the battery remaining capacity of each EV 10 determined as having the likelihood of connection to the piece of EVSE 11 at the predetermined point in time. Then, the prediction-value calculation unit 114 calculates the first suppliable-power prediction value by adding together the battery remaining capacity at the predetermined point in time of the on-vehicle battery 13 of each EV 10.

Note that if the predetermined point in time at which the power transaction is performed is in the far future from the present, such as several months later or one year later, the connection prediction unit 113 may predict the number of vehicles to be connected, instead of the likelihood of connection of the EV 10 at the predetermined point in time. Then, the prediction-value calculation unit 114 may predict the mean value of the respective battery remaining capacities of the on-vehicle batteries 13_1 to 13_n at the predetermined point in time, and may calculate, as the first suppliable-power prediction value, a value obtained by multiplying the predicted mean value by the number of vehicles to be connected predicted by the connection prediction unit 113.

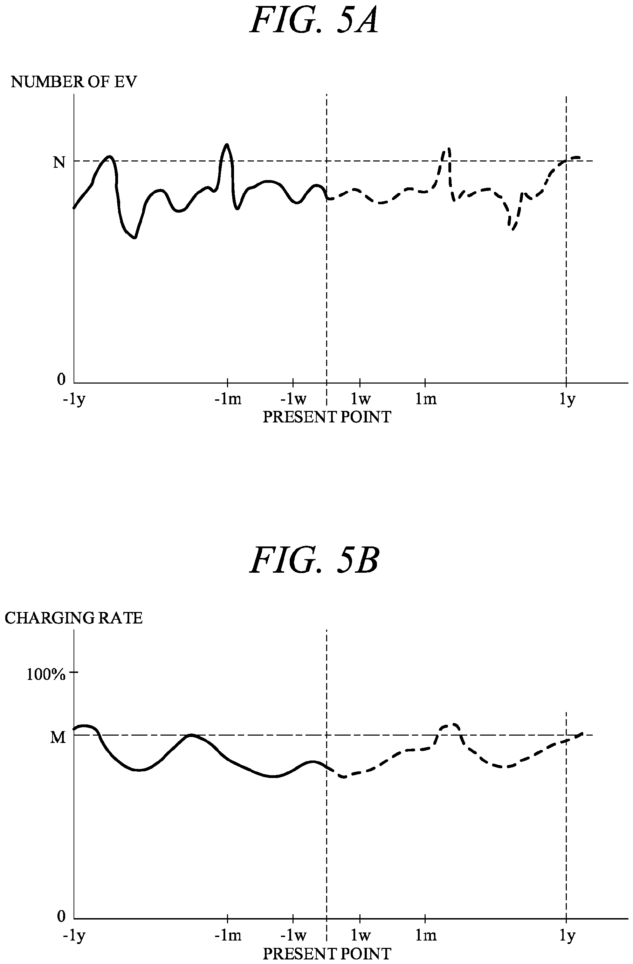

FIG. 5A is an explanatory graph illustrating a method of predicting the number of EVs 10 to be connected. Note that 1w, 1m, and 1y in the figure represent in point in time of one week later, one month later, and one year later, respectively. In addition, - 1w, -1m, and -1y in the figure represent in point in time of one week ago, one month ago, and one year ago, respectively. The similar applies to FIG. 5B described below.

The data indicated by the solid line in FIG. 5A indicates the past usage status of the pieces of EVSE 11_1 to 11_n, and is statistical data indicating the transition over the past one year of the number of EVs 10 connected to the pieces of EVSE 11_1 to 11_n. In the present embodiment, the connection prediction unit 113 acquires information indicating the connection state to the EV 10 from each piece of EVSE 11, generates such statistical data as above from the information, and stores in advance the statistical data in the storage unit 120. Note that the data indicated by the solid line may be statistical data acquired by averaging the data of the past years.

The data indicated by the broken line in FIG. 5A indicates the number of vehicles to be connected at each point in time in the future predicted from the data indicated by the solid line. For example, if the predetermined point in time at which the power transaction is performed is one year later, the connection prediction unit 113 predicts that the number of EVs 10 to be connected at the predetermined point in time is N.

FIG. 5B is an explanatory graph illustrating a method of predicting the mean value of the respective battery remaining capacities of the on-vehicle batteries 13 at the predetermined point in time. The data indicated by the solid line in FIG. 5B is statistical data indicating the transition over the past one year of the mean value of the battery remaining capacities of the EV group (EVs 10_ 1 to EV 10_n indicated in FIG. 1) managed by the aggregator 5. In the present embodiment, the prediction-value calculation unit 114 generates such statistical data as above, based on the vehicle information acquired from the EVs 10, and stores in advance the statistical data in the storage unit 120. Note that the data indicated by the solid line may be statistical data acquired by averaging the data of the past years.

The data indicated by the broken line in FIG. 5B indicates the mean value of the battery remaining capacities of the EV group at each point in time in the future predicted from the data indicated by the solid line (hereinafter, referred to as the prediction mean value). For example, if the predetermined point in time at which the power transaction is performed is one year later, the prediction-value calculation unit 114 predicts that the prediction mean value of the battery remaining capacities of the EV group at the predetermined point in time is M %.

The prediction-value calculation unit 114 multiplies the number of EVs 10 to be connected at the predetermined point in time predicted by the connection prediction unit 113 by the prediction mean value of the battery remaining capacities of the EV group at the predetermined point in time to calculate the first suppliable-power prediction value.

In addition, the prediction-value calculation unit 114 acquires the battery remaining capacity at the predetermined point in time of each house battery 14, from the house battery-remaining-capacity information acquired from the corresponding house 12 by the house-information acquisition unit 112. Then, the prediction-value calculation unit 114 calculates the second suppliable-power prediction value by adding together the acquired battery remaining capacity of each house battery 14.

Meanwhile, in response to a bid for power to the power transaction market, the aggregator 5 needs reliable supply of the amount of power to be transacted in the power transaction. However, depending on the accuracy of prediction, the first suppliable-power prediction value and the second suppliable-power prediction value may be different from actual values, that is, the amount of power actually supplied from the on-vehicle batteries 13 to the power grid 2 at the predetermined point in time and the amount of power actually supplied from the house batteries 14 to the power grid 2 at the predetermined point in time.

Therefore, even if such a difference occurs, in order to supply reliably power to be transacted in the power transaction, the prediction-value correction unit 115 adds a negative margin in accordance with the accuracy of prediction, to each of the first suppliable-power prediction value and the second suppliable-power prediction value to correct the prediction values.

At this time, the prediction-value correction unit 115 adds margins different in level one-to-one to the first suppliable-power prediction value and the second suppliable-power prediction value. Specifically, the prediction-value correction unit 115 makes the absolute value of the margin to be added to the first suppliable-power prediction value (hereinafter, may be referred to as the first margin) larger than that of the margin to be added to a prediction value of the second suppliable-power prediction value (hereinafter, may be referred to as the second margin). This is because for an on-vehicle battery 13 that varies in connection state to the power grid 2 due to movement of the EV 10, it is more difficult to predict the suppliable power as compared with a house battery 14 and for the assumption that the difference between the first suppliable-power prediction value and the actual value is larger than the difference between the second suppliable-power prediction value and the actual value.

The prediction-value correction unit 115 also increases the respective absolute values of the margins to be added one-to-one to the first suppliable-power prediction value and the second suppliable-power prediction value as the duration from the present point in time to the predetermined point in time is longer. This is because for the assumption that as the duration from the present point in time to the predetermined point in time is longer, the difference between the first suppliable-power prediction value and the actual value and between the second suppliable-power prediction value and the actual value is larger.

Based on the first suppliable-power prediction value and the second suppliable-power prediction value that are corrected by the prediction-value correction unit 115, the bid determination unit 116 determines whether or not a bid for power for supply from the on-vehicle batteries 13 and the house batteries 14 can be made in the power transaction market.

In the present embodiment, the bid determination unit 116 determines that the bid can be made in the power transaction market when the total value of the corrected first suppliable-power prediction value and the corrected second suppliable-power prediction value is not less than the amount of power required by the power transaction market, that is, the amount of power to be transacted.

The power-amount detection unit 117 detects the amount of power supplied from each on-vehicle battery 13 and each house battery 14 to the power grid 2. Specifically, each EV 10 is provided with a measuring instrument (not illustrated) for measuring the amount of power input to and output from the corresponding on-vehicle battery 13, and the power-amount detection unit 117 acquires, from the EV 10, the amount of power detected by the measuring instrument of the EV 10 via a wireless communication network (not illustrated). In addition, each house 12 is provided with a measuring instrument (not illustrated) for measuring the amount of power input to and output from the corresponding house battery 14, and the power-amount detection unit 117 acquires, from the house 12, the amount of power detected by the measuring instrument of the house 12 via the communication network 6.

In the present embodiment, in response to the power transaction at the predetermined point in time, the power-amount detection unit 117 detects the amount of power supplied from each of the on-vehicle battery 13 and the house battery 14 to the power grid 2. Then, the power-amount detection unit 117 stores, in the achievement storage unit 122, achievement information including information regarding the difference between the amounts of power detected at the predetermined point in time (that is, the actual measurement values) and the total value of the corrected first suppliable-power prediction value and the corrected second suppliable-power prediction value.

The prediction-value correction unit 115 corrects the margins to be added one-to-one to the first suppliable-power prediction value and the second suppliable-power prediction value, based on the achievement information stored in the achievement storage unit 122. In the present embodiment, the prediction-value correction unit 115 increases the margins to be added one-to-one to the first suppliable-power prediction value and the second suppliable-power prediction value as the difference indicated by the achievement information is larger. At this time, the prediction-value correction unit 115 sets the margins such that the total value of the margin to be added to the first suppliable-power prediction value and the margin to be added to the second suppliable-power prediction value is not less than the level of the difference indicated by the achievement information.

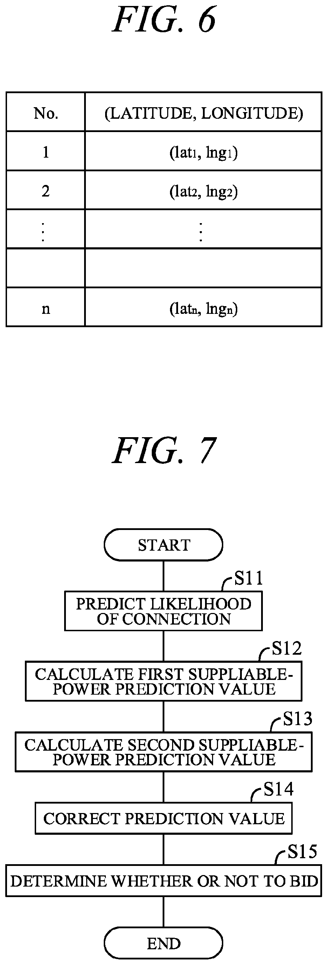

The position-information storage unit 121 stores in advance the position information of the piece of EVSE 11. FIG. 6 illustrates exemplary position information. As illustrated in FIG. 6, the position information indicates the position of a piece of EVSE 11. In the example illustrated in FIG. 6, the position of the piece of EVSE 11 is represented by latitude and longitude; however, the position of the piece of EVSE 11 may be represented by other parameters.

The achievement storage unit 122 stores the achievement information including the information regarding the difference between the prediction value (the above post-corrected prediction value) of the amount of power suppliable from each of the on-vehicle battery 13 and the house battery 14 to the power grid 2 at the predetermined point in time and the detection value (the actual measurement value) of the amount of power detected by the power-amount detection unit 117 at the predetermined point in time.

Next, the operation of the bid management apparatus 100 according to the present embodiment will be described. FIG. 7 is a flowchart illustrating an exemplary operation of the bid management apparatus 100. The processing illustrated in FIG. 7 is performed at any timing between the invitation for a bid and the deadline of the invitation in the power transaction market.

First, in Step S11, the connection prediction unit 113 predicts the likelihood of connection of an EV10 to a piece of EVSE 11 or the number of EVs 10 to be connected at a predetermined point in time.

Next, in Step S12, based on the prediction result of the connection prediction unit 113, the prediction-value calculation unit 114 calculates a prediction value of the amount of power suppliable by an on-vehicle battery 13 to the power grid 2 at the predetermined point in time, that is, a first suppliable-power prediction value.

Next, in Step S13, the prediction-value calculation unit 114 calculates a prediction value of the amount of power suppliable by a house battery 14 to the power grid 2 at the predetermined point in time, that is, a second suppliable-power prediction value. Note that in a case where an energy source such as an engine generator or a solar generator capable of generating power is in connection with the power grid 2, the prediction-value calculation unit 114 calculates the second suppliable-power prediction value including a prediction value of the amount of power suppliable by such an energy source.

Next, in Step S14, the prediction-value correction unit 115 adds margins one-to-one to the first suppliable-power prediction value and the second suppliable-power prediction value calculated by the prediction-value calculation unit 114 to correct each of the prediction values.

Next, in Step S15, based on the first suppliable-power prediction value and the second suppliable-power prediction value that are corrected by the prediction-value correction unit 115, the bid determination unit 116 determines whether or not a bid for power supplied from the on-vehicle battery 13 and the house battery 14 can be made in the power transaction market. The bid determination unit 116 transmits information indicating the determination result of Step S15 to the aggregator 5.

In a case where the information received from the bid determination unit 116 indicates that the bid can be made, the control unit (not illustrated) of the aggregator 5 performs the bid to the power transaction market.

According to the embodiment of the present invention, the following functions and effects can be obtained.
(1) A bid management apparatus 100 that manages a bid for power supplied from each of batteries 13, 14 to a power grid 2 to a power transaction market, includes: a prediction-value calculation unit 114 configured to calculate a prediction value of an amount of power suppliable to the power grid by each of the batteries in connection with the power grid 2 at a predetermined point in time in future at which a power transaction is performed, a prediction-value correction unit 115 configured to add a margin to the prediction value calculated by the prediction-value calculation unit 114 to correct the prediction value; and a bid determination unit 116 configured to determine, based on the prediction value corrected by the prediction-value correction unit 115, whether or not the bid for the power supplied from each of the batteries 13, 14 in connection with the power grid 2 at the predetermined point in time is able to be made in the power transaction market.

Thus, based on the amount of power suppliable from each of the batteries in connection with the power grid 2 at the predetermined point in time in the future at which the power transaction is performed, it is determined whether or not the bid is able to be made. Therefore, even in a case where the batteries include an on-vehicle battery that varies in connection state to the power grid due to movement of the EV, it can be suitably determined whether or not the bid is able to be made. As a result, the electric vehicle is allowed to participate in the power transaction.

In addition, even in a case where an energy source capable of generating power is in connection with the power grid 2, as described above, the prediction-value calculation unit 114 can calculate the prediction value of the amount of power suppliable to the power grid at the predetermined point in time including the amount of power supplied from such a power source. Therefore, even in the case where the energy source capable of generating power is in connection with the power grid, it can be determined accurately whether or not the bid to the power transaction market is able to be made.
(2) The battery 13 and the battery 14 serve, respectively, as a first battery (on-vehicle battery) 13 provided to a movable object (EV) 10 and a second battery (house battery) 14 provided to a non-movable object (house) 12. The prediction-value correction unit 115 makes the margin to be added to the prediction value of the first battery 13 calculated by the prediction-value calculation unit 114 larger than the margin to be added to the prediction value of the second battery 14 calculated by the prediction-value calculation unit 114. Thus, even in a case where the batteries include an on-vehicle battery that varies in connection state to the power grid due to movement of the EV, it can be more suitably determined whether or not the bid is able to be made.
(3) The prediction-value correction unit 115 increases the margin to be added to the prediction value calculated by the prediction-value calculation unit 114 as a duration from a present point in time to the predetermined point in time is longer. Thus, it can be determined whether or not the bid is able to be made regardless of the length of duration from the present point in time to the predetermined point in time at which the power transaction is performed.
(4) The bid management apparatus 100 further includes: a power-amount detection unit 117 configured to detect an amount of the power supplied from each of the batteries 13, 14 to the power grid 2; and a storage unit (achievement storage unit) 122 configured to store achievement information including information regarding a difference between the prediction value of the amount of power suppliable from each of the batteries 13, 14 to the power grid 2 at the predetermined point in time and a detection value of the amount of the power detected by the power-amount detection unit 117 at the predetermined point in time. The prediction-value correction unit 115 corrects the margin to be added to the prediction value calculated by the prediction-value calculation unit 114, based on the achievement information stored by the achievement storage unit 122. Furthermore, the prediction-value correction unit 115 increases the margin to be added to the prediction value calculated by the prediction-value calculation unit 114 as the difference between the prediction value and the detection value included in the achievement information stored in the achievement storage unit 122 is larger. Thus, based on the amount of the power actually supplied from the on-vehicle battery 13 or the house battery 14 to the power grid 2 in a past power transaction, the amount of power suppliable from the on-vehicle battery 13 or the house battery 14 to the power grid 2 in a next power transaction can be predicted. Therefore, it can be more suitably determined whether or not the bid is able to be made.

In addition, there has been exemplified in the above embodiment that one aggregator 5 is provided in the power system 1. However, in a case where a plurality of aggregators is provided in a power system and the aggregators manage one-to-one EV groups different from each other, each aggregator may be equipped with a power management apparatus.

There has been exemplified in the above embodiment, the bid management apparatus 100 is equipped with the aggregator 5. A bid management apparatus, however, may be provided outside an aggregator. For example, the bid management apparatus may be provided between the aggregator and an EV group.

In addition, there has been exemplified in the above embodiment that an on-vehicle battery 13 as a mobile battery is connected to the power grid 2. However, the mobile battery connected to the power grid 2 is not limited to such an on-vehicle battery. Furthermore, there has been exemplified in the above embodiment that a house battery 14 as a stationary battery is connected to the power grid 2. However, the stationary battery connected to the power grid 2 is not limited to such a house battery. Still furthermore, in a case where a mobile generator as an energy source is in connection with the power grid 2 and statistical data (statistical data corresponding to that in FIG. 5A or 5B) regarding the past usage status and the power-generation capacity of the mobile generator can be acquired, a prediction-value calculation unit 114 may predict the amount of power suppliable by the mobile generator. Then, the prediction-value calculation unit 114 may make the prediction value of the amount of suppliable power of the mobile generator obtained by the prediction include in the first suppliable-power prediction value.

In the present embodiment, all of the battery remaining capacity of an on-vehicle battery 13 is used to calculate the first suppliable-power prediction value. However, in a case where the user provides the power of the on-vehicle battery 13 to the power grid 2 via a piece of EVSE at a remote location, it is assumed that the user provides the power of the on-vehicle battery 13 while leaving the power of a predetermined capacity necessary and enough to return home. Thus, a value obtained by subtracting the predetermined capacity from the battery remaining capacity of the on-vehicle battery 13 may be used to calculate the first suppliable-power prediction value. Similarly, in calculation of the second suppliable-power prediction value, a value obtained by subtracting a predetermined capacity from the battery remaining capacity of a house battery 14 may be used.

In addition, the prediction-value correction unit 115 may change the absolute value of the margin to be added to the first suppliable-power prediction value, based on the degree of a reward given to the user of an EV 10 in response to the connection of the EV 10 to a piece of EVSE 11. For example, as the degree of a reward given to the user of an EV 10 in response to the connection of the EV 10 to a piece of EVSE 11 is larger, the number of EVs 10 connected one-to-one to pieces of EVSE 11 at a predetermined point in time is assumed to be larger.

Thus, as the degree of a reward given to the user of an EV 10 in response to the connection of the EV 10 to a piece of EVSE 11 is larger, the absolute value of the margin to be added to the first suppliable-power prediction value may be reduced. As a result, the prediction-value correction unit 115 corrects more suitably the first suppliable-power prediction value, and the accuracy of determination in the bid determination unit 116 can be improved.

Furthermore, the prediction-value correction unit 115 may predict the external environment state such as the weather or the temperature at a predetermined point in time, and may change, based on the prediction result, the absolute value of the margin to be added to the first suppliable-power prediction value and the absolute value of the margin to be added to the second suppliable-power prediction value.

For example, in a case where the temperature at a predetermined point in time is a temperature at which, for example, heating or cooling is required, it is assumed that the respective battery remaining capacities of an on-vehicle battery 13 and a house battery 14 are smaller than a case where heating or cooling is not required. Thus, as the degree of the temperature at the predetermined point in time deviating from a predetermined range is larger, the absolute value of the margin added to the first suppliable-power prediction value and the absolute value of the margin to be added to the second suppliable-power prediction value may be increased. Note that the prediction-value correction unit 115 may acquire information regarding the weather or the temperature from an external server (not illustrated) or the like to predict the weather, the temperature, or the like at the predetermined point in time, based on the information. In a case where the information regarding the weather or the temperature at the predetermined point in time can be acquired from the external server or the like, the prediction-value correction unit 115 may change the respective absolute values of the margins, based on the information.

The above embodiment can be combined as desired with one or more of the above modifications. The modifications can also be combined with one another.

According to the present invention, it can be determined accurately whether or not a bid for power supplied from a predetermined energy source capable of generating or storing power to a power grid, to a power transaction market can be made.

Above, while the present invention has been described with reference to the preferred embodiments thereof, it will be understood, by those skilled in the art, that various changes and modifications may be made thereto without departing from the scope of the appended claims.

A bid management apparatus (100) manages a bid to a power transaction market. The bid management apparatus includes: a prediction-value calculation unit (114) calculating a prediction value of an amount of a power suppliable to a power grid (2) by each of an energy sources (13,14) in connection with the power grid (2) at a predetermined point in time in future at which a power transaction is performed; a prediction-value correction unit (115) adding a margin to the prediction value to correct the prediction value; and a bid determination unit (116) determining, based on the prediction value, whether or not the bid for the power supplied from each of the energy sources (13,14) in connection with the power grid (2) at the predetermined point in time is able to be made in the power transaction market.

## Claims

1. A bid management apparatus (100) communicable via a communication network (6) with an aggregator (5) making a bid to a power transaction market and managing the bid by the aggregator (5), the bid for a power supplied from each of energy sources (13,14) capable of generating a power or storing a power to a power grid (2), the bid management apparatus comprising:
An information acquisition unit (111,112) communicable via the communication network (6) with the energy sources (13,14) and configured to acquire from the energy sources (13,14) via the communication network, an information identifiable an amount of a suppliable power by the energy sources (13,14);
a prediction-value calculation unit (114) configured to calculate a prediction value of an amount of a power suppliable to the power grid (2) by each of the energy sources (13,14) in connection with the power grid (2) at a predetermined point in time in future at which a power transaction is performed based on the information acquired by the information acquisition unit (111,112);
a prediction-value correction unit (115) configured to add a negative margin to the prediction value calculated by the prediction-value calculation unit (114) to correct the prediction value, the negative margin being a margin whose absolute value is increased as a duration from a present point in time to the predetermined point in time is longer; and
a bid determination unit (116) configured to determine, when the prediction value corrected by the prediction-value correction unit (115) is equal to or more than an amount of power required by the power transaction market, whether or not the bid for the power supplied from each of the energy sources (13,14) in connection with the power grid (2) at the predetermined point in time is able to be made in the power transaction market to transmit a determination result to the aggregator (5) via the communication network (6),
wherein
the bid management apparatus (100) further comprises:
a memory unit (120);
a connection prediction unit (113); and
a power-amount detection unit (117) configured to detect an amount of the power supplied from each of the energy sources (13,14) to the power grid (2),
the energy sources (13,14) include on-vehicle batteries (13),
vehicles (10) including the on-vehicle batteries (13) are connected to the power grid (2) via connection apparatuses (11),
the memory unit (120) is configured to store a position information of each of the connection apparatuses (11) and an achievement information, the achievement information including a difference information regarding a difference between the prediction value of the amount of the power suppliable from each of the energy sources (13,14) to the power grid (2) at the predetermined point in time and a detection value of the amount of the power at the predetermined point in time by the power-amount detection unit (117),
the information acquisition unit (111,112) is configured to acquire from each of the vehicles (10), a vehicle information including a travel route of each of the vehicles (10) from the present point in time to the predetermined point in time and a remaining storage capacity of each of the on-vehicle batteries (13) of the vehicles (10),
the connection prediction unit (113) is configured to determine whether each of the vehicles (10) has a likelihood of connection to any of the connection apparatuses (11), based on the position information of each of the connection apparatuses (11) stored in the memory unit (120) and a position of each of the vehicles (10) at the predetermined point in time specified from the travel route included in the vehicle information of each of the vehicles (10) acquired by the information acquisition unit (111,112), to calculate the prediction value of the amount of a power suppliable to the power grid (2) by each of the vehicles (10) at the predetermined point in time, based on the remaining storage capacity included in the vehicle information of each of vehicles (10) which are determined to have a likelihood of connection to any of the connection apparatuses (11) at the predetermined point in time, and
the prediction-value correction unit (115) is configured to further correct the prediction value increasing the margin to be added to the prediction value as the difference indicated by the difference information included in the achievement information stored in the memory unit (120) is larger.

2. The bid management apparatus (100) according to claim 1, wherein
the on-vehicle batteries (13) are first batteries (13),
the energy sources (13,14) further include second batteries (14) provided to non-movable objects (12), and
the prediction-value correction unit (115) is configured to make the margin to be added to the prediction value of the first batteries (13) calculated by the prediction-value calculation unit (114) larger than the margin to be added to the prediction value of the second batteries (14) calculated by the prediction-value calculation unit (114).

3. The bid management apparatus (100) according to claim 1 or 2, wherein
the prediction-value correction unit (115) is configured to set a first margin added to the prediction value of the first battery (13) and a second margin added to the prediction value of the second battery (14) so that a value of sum of the first margin and the second margin is equal to or more than the difference indicated by the difference information included in the achievement information stored in the memory unit (120).

4. The bid management apparatus (100) according to any one of claims 1 to 3, wherein
the prediction-value correction unit (115) is configured to predict a status of an external circumstance at the predetermined point in time to vary, based on the status of the external circumstance, an absolute value of the margin added to the prediction value calculated by the prediction-value calculation unit (114).

5. The bid management apparatus (100) according to any one of claims 1 to 4, wherein
the prediction-value calculation unit (114) is configured to calculate, when each of the energy sources (13,14) is an on-vehicle battery (13), the prediction value of the amount of the power suppliable from each of the energy sources (13,14) to the power grid (2) at the predetermined point in time based on values obtained by subtracting a predetermined capacity from a remaining storage capacity of each of the energy sources (13,14).

6. A bid management method managing a bid to a power transaction market by an aggregator (5), the bid for a power supplied from each of energy sources (13,14) capable of generating a power or storing a power to a power grid (2), the bid management method comprising:
acquiring from the energy sources (13,14) via a communication network (6), an information identifiable an amount of a suppliable power by the energy sources (13,14);
calculating a prediction value of an amount of a power suppliable to the power grid (2) by each of the energy sources (13,14) in connection with the power grid (2) at a predetermined point in time in future at which a power transaction is performed, based on the information acquired in the acquiring;
adding a negative margin to the prediction value to correct the prediction value, the negative margin being a margin whose absolute value is increased as a duration from a present point in time to the predetermined point in time is longer; and
determining, when the prediction value to which the negative margin is added is equal to or more than an amount of power required by the power transaction market, whether or not the bid for the power supplied from each of the energy sources (13,14) in connection with the power grid (2) at the predetermined point in time is able to be made in the power transaction market to transmit a determination result to the aggregator (5) via the communication network (6), wherein
the bid management method further comprising:
detecting an amount of the power supplied from each of the energy sources (13,14) to the power grid (2);
the energy sources (13,14) include on-vehicle batteries (13), and wherein
the on-vehicle batteries (13) connect to the power grid (2) via connection apparatuses (11),
the acquiring includes acquiring from each of the vehicles (10) including the on-vehicle batteries (13), a vehicle information including a travel route of each of the vehicles (10) from the present point in time to the predetermined point in time and a record data of a remaining storage capacity of each of the on-vehicle batteries (13) of the vehicles (10),
the calculating includes determining whether each of the vehicles (10) has a likelihood of connection to any of the connection apparatuses (11), based on the position information of each of the connection apparatuses (11) stored in a memory unit (120) and a position of each of the vehicles (10) at the predetermined point in time specified from the travel route included in the vehicle information of each of the vehicles (10) acquired in the acquiring, to calculate the prediction value of the amount of a power suppliable to the power grid (2) by each of the vehicles (10) at the predetermined point in time, based on the remaining storage capacity included in the vehicle information of each of vehicles (10) which are determined to have a likelihood of connection to any of the connection apparatuses (11) at the predetermined point in time, and
the correcting includes further correcting the prediction value increasing the margin to be added to the prediction value as a difference indicated by a difference information included in an achievement information stored in the memory unit (120) is larger, the achievement information including the difference information regarding the difference between the prediction value of the amount of the power suppliable from each of the energy sources (13,14) to the power grid (2) at the predetermined point in time and a detection value of the amount of the power at the predetermined point in time in the detecting.

## Patentansprüche

1. Angebot-Verwaltungsvorrichtung (100), die über ein Kommunikationsnetzwerk (6) kommunikationsfähig ist, mit einem Aggregator (5), der ein Angebot für einen Stromtransaktionsmarkt macht, und die das Angebot von dem Aggregator (5) verwaltet, wobei das Angebot für Strom ist, der von jeder von Energiequellen (13, 14) zugeführt wird, die in der Lage sind, Strom für ein Stromnetz (2) zu erzeugen oder Strom zu speichern, wobei die Angebot-Verwaltungsvorrichtung aufweist:
eine Informationserfassungseinheit (111, 112), die über das Kommunikationsnetzwerk (6) mit den Energiequellen (13, 14) kommunikationsfähig ist und konfiguriert ist, um von den Energiequellen (13, 14) über das Kommunikationsnetzwerk Information zu erfassen, die in der Lage ist, eine Strommenge zu identifizieren, die von den Energiequellen (13, 14) lieferbar ist;
eine Vorhersagewertberechnungseinheit (114), die konfiguriert ist, um einen Vorhersagewert einer Strommenge zu berechnen, die zu dem Stromnetz (2) von jeder der Energiequellen (13, 14) in Verbindung mit dem Stromnetz (2) zu einem vorbestimmten Zeitpunkt in der Zukunft lieferbar ist, zu dem eine Stromtranskation ausgeführt wird, basierend auf der von der Informationserfassungseinheit (111, 112) erfassten Information;
eine Vorhersagewertkorrektureinheit (115), die konfiguriert ist, um eine negative Marge zu dem von der Vorhersagewertberechnungseinheit (114) berechneten Vorhersagewert zu addieren, um den Vorhersagewert zu korrigieren, wobei die negative Marge eine Marge ist, deren Absolutwert zunimmt, wenn eine Dauer ab einem gegenwärtigen Zeitpunkt bis zu dem vorbestimmten Zeitpunkt länger wird; und
eine Angebot-Bestimmungseinheit (116), die konfiguriert ist, um, wenn der von der Vorhersagewertkorrektureinheit (115) korrigierte Vorhersagewert gleich oder größer als eine vom Stromtransaktionsmarkt benötigte Strommenge ist, ob das Angebot für den von jeder der Energiequellen (13, 14) in Verbindung mit dem Stromnetz (2) zu dem vorbestimmten Zeitpunkt gelieferten Strom, in dem Stromtransaktionsmarkt gemacht werden kann oder nicht, um über das Kommunikationsnetzwerk (6) ein Bestimmungsergebnis zu dem Aggregator (5) zu senden,
wobei
die Angebot-Verwaltungsvorrichtung (100) ferner aufweist:
eine Speichereinheit (120);
eine Verbindungsvorhersageeinheit (113); und
eine Strommengendetektionseinheit (117), die konfiguriert ist, um eine Strommenge zu detektieren, die von jeder der Energiequellen (13, 14) zu dem Stromnetz (2) geliefert wird,
wobei die Energiequellen (13, 14) fahrzeugeigene Batterien (13) enthalten,
Fahrzeuge (10), welche die fahrzeugeigenen Batterien (13) enthalten, mit dem Stromnetz (2) über Verbindungsvorrichtungen (11) verbunden sind,
die Speichereinheit (120) konfiguriert ist, um Positionsinformation von jeder Verbindungsvorrichtungen (11) und Erfüllungsinformation zu speichern, wobei die Erfüllungsinformation eine Differenzinformation enthält, hinsichtlich einer Differenz zwischen dem Vorhersagewert der Strommenge, die von jeder der Energiequellen (13, 14) zu dem Stromnetz (2) zu dem vorbestimmten Zeitpunkt lieferbar ist, und einem Detektionswert der Strommenge zu dem vorbestimmten Zeitpunkt durch die Strommengendetektionseinheit (117),
die Informationserfassungseinheit (111, 112) konfiguriert ist, um von jedem der Fahrzeuge (10) Fahrzeuginformation zu erfassen, die eine Fahrtroute von jedem der Fahrzeuge (10) ab dem gegenwärtigen Zeitpunkt bis zu dem vorbestimmten Zeitpunkt sowie eine Restspeicherkapazität von jeder der fahrzeugeigenen Batterien (13) der Fahrzeuge (10) enthält,
die Verbindungsvorhersageeinheit (113) konfiguriert ist, um zu bestimmen, ob jedes der Fahrzeuge (10) eine Verbindungswahrscheinlichkeit mit einer der Verbindungsvorrichtungen (11) hat, basierend auf der Positionsinformation von jeder der Verbindungsvorrichtungen (11), die in der Speichereinheit (120) gespeichert ist, und einer Position von jedem der Fahrzeuge (10) zu dem vorbestimmten Zeitpunkt, die aus der Fahrtroute spezifiziert ist, die in der Fahrzeuginformation jeder der Fahrzeuge (10) enthalten ist, die von der Informationserfassungseinheit (111, 112) erfasst wird, um den Vorhersagewert der Strommenge, die von jedem der Fahrzeuge (10) zu dem vorbestimmten Zeitpunkt zum Stromnetz (2) lieferbar ist, basierend auf der Restspeicherkapazität zu berechnen, die in der Fahrzeuginformation von jedem der Fahrzeuge (10) enthalten ist, von denen bestimmt wird, dass sie eine Verbindungswahrscheinlichkeit mit einer der Verbindungsvorrichtungen (11) zu dem vorbestimmten Zeitpunkt haben, und
die Vorhersagewertkorrektureinheit (115) konfiguriert ist, um ferner den Vorhersagewert zu korrigieren, der die zu dem Vorhersagewert zu addierende Marge erhöht, wenn die Differenz, die durch die Differenzinformation angegeben wird, welche in der in der Speichereinheit (120) gespeicherten Erfüllungsinformation enthalten ist, größer wird.

2. Die Angebot-Verwaltungsvorrichtung (100) nach Anspruch 1, wobei
die fahrzeugeigenen Batterien (13) erste Batterien (13) sind,
die Energiequellen (13, 14) ferner zweite Batterien (14) enthalten, die an nichtbeweglichen Objekten (12) vorgesehen sind, und
die Vorhersagewertkorrektureinheit (115) konfiguriert ist, um die Marge, die zu dem von der Vorhersagewertberechnungseinheit (114) berechneten Vorhersagewert der ersten Batterien (13) zu addieren ist, größer zu machen als die Marge, die zu dem von der Vorhersagewertberechnungseinheit (114) berechneten Vorhersagewert der zweiten Batterien (14) zu addieren ist.

3. Die Angebot-Verwaltungsvorrichtung (100) nach Anspruch 1 oder 2, wobei
die Vorhersagewertkorrektureinheit (115) konfiguriert ist, um eine zu dem Vorhersagewert der ersten Batterie (13) zu addierende erste Marge und eine zu dem Vorhersagewert der zweiten Batterie (14) zu addierende zweite Marge derart zu setzen, dass ein Wert einer Summe der ersten Marge und der zweiten Marge gleich oder größer als die Differenz ist, die durch die Differenzinformation angegeben wird, die in der in der Speichereinheit (120) gespeicherten Erfüllungsinformation enthalten ist.

4. Die Angebot-Verwaltungsvorrichtung (100) nach einem der Ansprüche 1 bis 3, wobei
die Vorhersagewertkorrektureinheit (115) konfiguriert ist, um einen Status äußerer Umstände zu dem vorbestimmten Zeitpunkt vorherzusagen, um, basierend auf dem Status der äußeren Umstände, einen Absolutwert der Marge, die zu dem von der Vorhersagewertberechnungseinheit (114) berechneten Vorhersagewert addiert wird, zu verändern.

5. Die Angebot-Verwaltungsvorrichtung (100) nach einem der Ansprüche 1 bis 4, wobei
die Vorhersagewertberechnungseinheit (114) konfiguriert ist, um, wenn jede der Energiequellen (13, 14) eine fahrzeugeigene Batterie (13) ist, den Vorhersagewert der Strommenge, die von jeder der Energiequellen (13, 14) zu dem Stromnetz (2) zu dem vorbestimmten Zeitpunkt lieferbar ist, basierend auf Werten zu berechnen, die durch Subtrahieren einer vorbestimmten Kapazität von einer Restspeicherkapazität jeder der Energiequellen (13, 14) erhalten wird.

6. Angebot-Verwaltungsverfahren, das ein Angebot für einen Stromtransaktionsmarkt durch einen Aggregator (5) verwaltet, wobei das Angebot für Strom ist, der von jeder von Energiequellen (13, 14) geliefert wird, die in der Lage sind, Strom für ein Stromnetz (2) zu erzeugen oder Strom zu speichern, wobei das Angebot-Verwaltungsverfahren aufweist:
Erfassen, von den Energiequellen (13, 14) über ein Kommunikationsnetzwerk (6), von Information, die in der Lage ist, eine Strommenge zu identifizieren, die von den Energiequellen (13, 14) lieferbar ist;
Berechnen eines Vorhersagewerts einer Strommenge, die zu dem Stromnetz (2) von jeder der Energiequellen (13, 14) in Verbindung mit dem Stromnetz (2) zu einem vorbestimmten Zeitpunkt in der Zukunft lieferbar ist, zu dem eine Stromtransaktion durchgeführt wird, basierend auf der beim Erfassen erfassten Information;
Addieren einer negativen Marge zu dem Vorhersagewert, um den Vorhersagewert zu korrigieren, wobei die negative Marge eine Marge ist, deren Absolutwert zunimmt, wenn eine Dauer ab einem gegenwärtigen Zeitpunkt bis zu dem vorbestimmten Zeitpunkt länger wird; und
Bestimmen, wenn der Vorhersagewert, zu dem die negative Marge addiert ist, gleich oder größer als eine vom Stromtransaktionsmarkt benötigte Strommenge ist, ob das Angebot für den von jeder der Energiequellen (13, 14) in Verbindung mit dem Stromnetz (2) zu dem vorbestimmten Zeitpunkt gelieferten Strom in dem Stromtransaktionsmarkt gemacht werden kann oder nicht, um ein Bestimmungsergebnis zu dem Aggregator (5) über das Kommunikationsnetzwerk (6) zu senden, wobei
das Angebot-Verwaltungsverfahren ferner aufweist:
Detektieren einer Strommenge, die von jeder der Energiequellen (13, 14) zu dem Stromnetz (2) geliefert wird;
die Energiequellen (13, 14) fahrzeugeigene Batterien (13) enthalten, und wobei
die fahrzeugeigenen Batterien (13) mit dem Stromnetz (2) über eine Verbindungsvorrichtung (11) verbunden sind,
wobei das Erfassen enthält, von jedem der Fahrzeuge (10), welche die fahrzeugeigenen Batterien (13) enthalten, Fahrzeuginformation zu erfassen, die eine Fahrtroute von jedem der Fahrzeuge (10) ab dem gegenwärtigen Zeitpunkt bis zu dem vorbestimmten Zeitpunkt enthält, sowie Aufzeichnungsdaten einer Restspeicherkapazität von jeder der fahrzeugeigenen Batterien (13) der Fahrzeuge (10),
wobei das Berechnen enthält, zu bestimmen, ob jedes der Fahrzeuge (10) eine Verbindungswahrscheinlichkeit mit einer der Verbindungsvorrichtungen (11) hat, basierend auf der Positionsinformation von jeder der Verbindungsvorrichtungen (11), die in der Speichereinheit (120) gespeichert ist, und einer Position von jedem der Fahrzeuge (10) zu dem vorbestimmten Zeitpunkt, die aus der Fahrtroute spezifiziert ist, die in der Fahrzeuginformation von jedem der Fahrzeuge (10) enthalten ist, die beim Erfassen erfasst wird, um den Vorhersagewert der Strommenge, die von jedem der Fahrzeuge (10) zu dem vorbestimmten Zeitpunkt zum Stromnetz (2) lieferbar ist, basierend auf der Restspeicherkapazität zu berechnen, die in der Fahrzeuginformation von jedem der Fahrzeuge (10) enthalten ist, von denen bestimmt wird, dass sie eine Verbindungswahrscheinlichkeit mit einer der Verbindungsvorrichtungen (11) zu dem vorbestimmten Zeitpunkt haben, und
das Korrigieren ferner enthält, den Vorhersagewert zu korrigieren, der die zu dem Vorhersagewert zu addierende Marge erhöht, wenn eine Differenz, die durch eine Differenzinformation, die in der in der Speichereinheit (120) gespeicherten Erfüllungsinformation enthalten ist, größer wird, wobei die Erfüllungsinformation die Differenzinformation hinsichtlich der Differenz zwischen dem Vorhersagewert der Strommenge, die von jeder der Energiequellen (13, 14) zu dem Stromnetz (2) zu dem vorbestimmten Zeitpunkt lieferbar ist, und einem Detektionswert der Strommenge zu dem vorbestimmten Zeitpunkt beim Detektieren enthält.

## Revendications

1. Appareil de gestion d'offre (100) pouvant communiquer via un réseau de communication (6) avec un agrégateur (5) faisant une offre à un marché de transaction d'électricité et gérant l'offre par l'agrégateur (5), l'offre étant pour de l'électricité fournie à partir de chacune de sources d'énergie (13, 14) capables de générer de l'électricité ou de stocker de l'électricité dans un réseau électrique (2), l'appareil de gestion d'offre comprenant :
une unité d'acquisition d'information (111, 112) pouvant communiquer via le réseau de communication (6) avec les sources d'énergie (13, 14) et configurée pour acquérir, à partir des sources d'énergie (13, 14) via le réseau de communication, une information identifiant une quantité d'électricité pouvant être fournie par les sources d'énergie (13, 14) ;
une unité de calcul de valeur de prédiction (114) configurée pour calculer une valeur de prédiction d'une quantité d'électricité pouvant être fournie au réseau électrique (2) par chacune des sources d'énergie (13, 14) en liaison avec le réseau électrique (2) à un instant futur prédéterminé auquel une transaction d'électricité est réalisée sur la base de l'information acquise par l'unité d'acquisition d'information (111, 112) ;
une unité de correction de valeur de prédiction (115) configurée pour ajouter une marge négative à la valeur de prédiction calculée par l'unité de calcul de valeur de prédiction (114) pour corriger la valeur de prédiction, la marge négative étant une marge dont une valeur absolue augmente avec l'augmentation d'une durée depuis un instant présent jusqu'à l'instant prédéterminé ; et
une unité de détermination d'offre (116) configurée pour déterminer, lorsque la valeur de prédiction corrigée par l'unité de correction de valeur de prédiction (115) est supérieure ou égale à une quantité d'électricité requise par le marché de transaction d'électricité, si l'offre pour l'électricité fournie à partir de chacune des sources d'énergie (13, 14) en liaison avec le réseau électrique (2) à l'instant prédéterminé peut ou non être faite sur le marché de transaction d'électricité pour transmettre un résultat de détermination à l'agrégateur (5) via le réseau de communication (6),
dans lequel
l'appareil de gestion d'offre (100) comprend en outre :
une unité de mémoire (120) ;
une unité de prédiction de liaison (113) ; et
une unité de détection de quantité d'électricité (117) configurée pour détecter une quantité d'électricité fournie à partir de chacune des sources d'énergie (13, 14) au réseau électrique (2),
les sources d'énergie (13, 14) comportent des batteries embarquées (13),
des véhicules (10) comportant les batteries embarquées (13) sont reliés au réseau électrique (2) via des appareils de liaison (11),
l'unité de mémoire (120) est configurée pour stocker une information de position de chacun des appareils de liaison (11) et une information de rendement, l'information de rendement comportant une information de différence relative à une différence entre la valeur de prédiction de la quantité d'électricité pouvant être fournie à partir de chacune des sources d'énergie (13, 14) au réseau électrique (2) à l'instant prédéterminé et une valeur de détection de la quantité d'électricité à l'instant prédéterminé par l'unité de détection de quantité d'électricité (117),
l'unité d'acquisition d'information (111, 112) est configurée pour acquérir, à partir de chacun des véhicules (10), une information de véhicule comportant un itinéraire de déplacement de chacun des véhicules (10) depuis l'instant présent jusqu'à l'instant prédéterminé et une capacité de stockage restante de chacune des batteries embarquées (13) des véhicules (10),
l'unité de prédiction de liaison (113) est configurée pour déterminer si chacun des véhicules (10) présente ou non une vraisemblance de liaison à l'un quelconque des appareils de liaison (11), sur la base de l'information de position de chacun des appareils de liaison (11) stockée dans l'unité de mémoire (120) et d'une position de chacun des véhicules (10) à l'instant prédéterminé spécifiée à partir de l'itinéraire de déplacement compris dans l'information de véhicule de chacun des véhicules (10) acquise par l'unité d'acquisition d'information (111, 112), pour calculer la valeur de prédiction de la quantité d'électricité pouvant être fournie au réseau électrique (2) par chacun des véhicules (10) à l'instant prédéterminé, sur la base de la capacité de stockage restante comprise dans l'information de véhicule de chacun des véhicules (10) pour lesquels il est déterminé qu'ils présentent une vraisemblance de liaison à l'un quelconque des appareils de liaison (11) à l'instant prédéterminé, et
l'unité de correction de valeur de prédiction (115) est configurée pour corriger davantage la valeur de prédiction en augmentant la marge à ajouter à la valeur de prédiction au fur et à mesure de l'augmentation de la différence indiquée par l'information de différence comprise dans l'information de rendement stockée dans l'unité de mémoire (120).

2. Appareil de gestion d'offre (100) selon la revendication 1, dans lequel
les batteries embarquées (13) sont des premières batteries (13),
les sources d'énergie (13, 14) comportent en outre des deuxièmes batteries (14) prévues sur des objets non mobiles (12), et
l'unité de correction de valeur de prédiction (115) est configurée pour faire en sorte que la marge à ajouter à la valeur de prédiction des premières batteries (13) calculée par l'unité de calcul de valeur de prédiction (114) soit plus grande que la marge à ajouter à la valeur de prédiction des deuxièmes batteries (14) calculée par l'unité de calcul de valeur de prédiction (114).

3. Appareil de gestion d'offre (100) selon la revendication 1 ou 2, dans lequel
l'unité de correction de valeur de prédiction (115) est configurée pour définir une première marge ajoutée à la valeur de prédiction de la première batterie (13) et une deuxième marge ajoutée à la valeur de prédiction de la deuxième batterie (14) de sorte qu'une valeur de somme de la première marge et de la deuxième marge soit supérieure ou égale à la différence indiquée par l'information de différence comprise dans l'information de rendement stockée dans l'unité de mémoire (120).

4. Appareil de gestion d'offre (100) selon l'une quelconque des revendications 1 à 3, dans lequel
l'unité de correction de valeur de prédiction (115) est configurée pour prédire un état d'une circonstance externe à l'instant prédéterminé pour faire varier, sur la base de l'état de la circonstance externe, une valeur absolue de la marge ajoutée à la valeur de prédiction calculée par l'unité de calcul de valeur de prédiction (114).

5. Appareil de gestion d'offre (100) selon l'une quelconque des revendications 1 à 4, dans lequel
l'unité de calcul de valeur de prédiction (114) est configurée pour calculer, lorsque chacune des sources d'énergie (13, 14) est une batterie embarquée (13), la valeur de prédiction de la quantité d'électricité pouvant être fournie à partir de chacune des sources d'énergie (13, 14) au réseau électrique (2) à l'instant prédéterminé sur la base de valeurs obtenues par la soustraction d'une capacité prédéterminée à une capacité de stockage restante de chacune des sources d'énergie (13, 14).

6. Procédé de gestion d'offre pour la gestion d'une offre à un marché de transaction d'électricité par un agrégateur (5), l'offre étant pour de l'électricité fournie à partir de chacune de sources d'énergie (13, 14) capables de générer de l'électricité ou de stocker de l'électricité dans un réseau électrique (2), le procédé de gestion d'offre comprenant :
l'acquisition, à partir des sources d'énergie (13, 14) via un réseau de communication (6), d'une information identifiant une quantité d'électricité pouvant être fournie par les sources d'énergie (13, 14) ;
le calcul d'une valeur de prédiction d'une quantité d'électricité pouvant être fournie au réseau électrique (2) par chacune des sources d'énergie (13, 14) en liaison avec le réseau électrique (2) à un instant futur prédéterminé auquel une transaction d'électricité est réalisée, sur la base de l'information acquise à l'acquisition ;
l'ajout d'une marge négative à la valeur de prédiction pour corriger la valeur de prédiction, la marge négative étant une marge dont une valeur absolue augmente avec l'augmentation d'une durée depuis un instant présent jusqu'à l'instant prédéterminé ; et
la détermination, lorsque la valeur de prédiction à laquelle la marge négative est ajoutée est supérieure ou égale à une quantité d'électricité requise par le marché de transaction d'électricité, si l'offre pour l'électricité fournie à partir de chacune des sources d'énergie (13, 14) en liaison avec le réseau électrique (2) à l'instant prédéterminé peut ou non être faite sur le marché de transaction d'électricité pour transmettre un résultat de détermination à l'agrégateur (5) via le réseau de communication (6), dans lequel
le procédé de gestion d'offre comprend en outre :
la détection d'une quantité d'électricité fournie à partir de chacune des sources d'énergie (13, 14) au réseau électrique (2),
les sources d'énergie (13, 14) comportent des batteries embarquées (13), et dans lequel
les batteries embarquées (13) sont reliées au réseau électrique (2) via des appareils de liaison (11),
l'acquisition comporte l'acquisition, à partir de chacun des véhicules (10) comportant les batteries embarquées (13), d'une information de véhicule comportant un itinéraire de déplacement de chacun des véhicules (10) depuis l'instant présent jusqu'à l'instant prédéterminé et une donnée d'enregistrement d'une capacité de stockage restante de chacune des batteries embarquées (13) des véhicules (10),
le calcul comporte la détermination si chacun des véhicules (10) présente ou non une vraisemblance de liaison à l'un quelconque des appareils de liaison (11), sur la base de l'information de position de chacun des appareils de liaison (11) stockée dans l'unité de mémoire (120) et d'une position de chacun des véhicules (10) à l'instant prédéterminé spécifiée à partir de l'itinéraire de déplacement compris dans l'information de véhicule de chacun des véhicules (10) acquise à l'acquisition, pour calculer la valeur de prédiction de la quantité d'électricité pouvant être fournie au réseau électrique (2) par chacun des véhicules (10) à l'instant prédéterminé, sur la base de la capacité de stockage restante comprise dans l'information de véhicule de chacun des véhicules (10) pour lesquels il est déterminé qu'ils présentent une vraisemblance de liaison à l'un quelconque des appareils de liaison (11) à l'instant prédéterminé, et
la correction comporte la correction davantage de la valeur de prédiction en augmentant la marge à ajouter à la valeur de prédiction au fur et à mesure de l'augmentation d'une différence indiquée par une information de différence comprise dans une information de rendement stockée dans l'unité de mémoire (120), l'information de rendement comportant l'information de différence relative à la différence entre la valeur de prédiction de la quantité d'électricité pouvant être fournie à partir de chacune des sources d'énergie (13, 14) au réseau électrique (2) à l'instant prédéterminé et une valeur de détection de la quantité d'électricité à l'instant prédéterminé à la détection.
